# EUROPÄISCHE PATENTSCHRIFT

(11) **EP 3 489 206 B1**
(45) Veröffentlichungstag und Bekanntmachung des Hinweises auf die Patenterteilung: **16.02.2022**
(21) Anmeldenummer: 18206776.9
(22) Anmeldetag: 16.11.2018
(51) Int. Cl.: C04B 28/02

(54) **BAUSTOFFGEMISCH ZUR VERWENDUNG ALS ELEKTRISCHES HEIZUNGSWERKSTOFFGEMISCH SOWIE HEIZKÖRPER MIT EINEM SOLCHEN BAUSTOFFGEMISCH**
BUILDING MATERIAL MIXTURE FOR USE AS AN ELECTRICAL HEATING MATERIAL MIXTURE AND HEATING ELEMENT WITH SUCH A BUILDING MATERIAL MIXTURE
MÉLANGE DE MATÉRIAUX DE CONSTRUCTION DESTINÉ À L'UTILISATION EN TANT QUE MÉLANGE DE MATÉRIAUX DE CHAUFFAGE ÉLECTRIQUE AINSI QUE RADIATEUR DOTÉ D'UN TEL MÉLANGE DE MATÉRIAUX DE CONSTRUCTION

(30) Priorität: 28.11.2017 DE 102017011019
(43) Veröffentlichungstag der Anmeldung: 29.05.2019
(73) Patentinhaber: ZKS Effektiv Heizung GmbH, 21079 Hamburg (DE)
(72) Erfinder: Zinke, Bernhard, 03044 Cottbus (DE)
(74) Vertreter: Zeitler Volpert Kandlbinder Patentanwälte Partnerschaft mbB

(56) Entgegenhaltungen:
- EP-A1- 2 712 853
- WO-A1-2005/085152
- WO-A1-2010/130353
- WO-A1-2015/076841
- CA-A1- 2 573 739
- DE-A1- 10 324 822
- DE-A1-102011 007 834
- DE-A1-102012 000 767
- DE-U1-202010 012 457
- US-A- 3 626 149
- US-A- 4 301 356
- WU T ET AL: "A study on electrical and thermal properties of conductive concrete", COMPUTERS & CONCRETE : AN INTERNATIONAL JOU, TECHNO-PRESS, TAEJON, KOREA, Bd. 12, Nr. 3, 1. Januar 2013 (2013-01-01) , Seiten 337-349, XP008170651, ISSN: 1598-8198, DOI: 10.12989/CAC.2013.12.3.337
- DATABASE WPI Week 200040 Thomson Scientific, London, GB; AN 2000-465930 XP002790121, MIODUSHEVSKY P. V.; REVEVSKAYA G. A.; RAPIAH L. N.: "Composite electroconducting material for electrothermal element comprises colloidal graphite electroconducting component, antiplastic filler, and quick cement binder", & WO 00/40519 A1 (POWERCO SPA) 13. Juli 2000 (2000-07-13) & CN 1 344 235 A (POWERCO S P A [IT]) 10. April 2002 (2002-04-10)
- ERIC STURM: "Elektrisch erzeugte Waerme verhindert Schnee und Eisglaette", INTERNET CITATION, 1 June 2016 (2016-06-01), pages 1-3, XP009517687, Retrieved from the Internet: URL:https://www.beton.org/aktuell/news/det ails/beheizbarer-beton-fuer-strassen-und-b ruecken/ [retrieved on 2017-11-01]

## Beschreibung

Die Erfindung betrifft ein Baustoffgemisch zur Verwendung als elektrisches Heizungswerkstoffgemisch mit einem unter Zugabe von Wasser aushärtbaren, als Bindemittel wirkenden Werkstoff sowie einen Heizkörper mit einem solchen Baustoffgemisch.

Elektrische Heizungssysteme haben den Vorteil eines relativ geringen Anschaffungswertes, da sie keine Wasserrohre, Gasleitungen oder ähnliches benötigen. Durch einen elektrischen Strom, der durch einen Heizungswiderstand fließt, kann eine benötigte Heizleistung in einfacher Weise zur Verfügung gestellt werden. Beliebt sind in der Baubranche großflächige elektrische Heizsysteme, die im Innenbereich aber auch im Außenbereich Anwendung finden. Solche Systeme sollen elektrisch sicher und leicht zu handhaben sein. Durch eine regenerative Energieerzeugung beispielsweise mittels Windturbinen oder Solarzellen kann eine umweltfreundliche und Klimaerwärmung verhindernde Wärmeerzeugung stattfinden.

In der Baubranche wird häufig Beton eingesetzt. Beton kann sich aus Zement, Wasser, Gesteinskörnung und ggf. Zusätzen und Fasern zusammensetzen. Durch das Mischen der Ausgangsstoffe entsteht Frischbeton. Dabei bilden Zement und Wasser den Zementleim. Durch die Erhärtung bzw. Auswertung des Zementleims im Frischbeton zu Zementstein entsteht Festbeton.

Zement ist ein anorganischer und nichtmetallischer Baustoff. Innerhalb der Baustoffe zählt Zement zu den Bindemitteln. Zu seiner Herstellung werden Kalkstein und Ton verwendet. Es werden häufig auch Quarzsand und eisenoxidhaltige Stoffe beigemischt.

Aus der Zeitschrift BETON Forschung, veröffentlicht im Juni 2016, Seiten 24 und 25 ist aus dem Beitrag "Elektrisch erzeugte Wärme verhindert Schnee- und Eisglätte" ein Betongemisch als beheizbarer Beton bekannt. Dieses umfasst Metallspäne, und zwar 20% Edelstahlspäne, und Kohlenstoffpartikel. Dadurch kann der Beton als elektrischer Heizkörper auf enge Grenzen beschränkt verwendet werden.

Die DE 20 2014 009 377 U1 zeigt und beschreibt ein Bauelement zum Bau von Wandheizungen. Dieses Bauelement weist eine 9,5 mm dicke Fasergipsplatte oder eine Gipskartonplatte auf, die an der Baustelle mit einer carbonfaserhaltigen Beschichtung versehen wird und auf deren Rückseite eine Aluminiumfolie aufgeklebt ist. Die Platte wird mittels einer Unterkonstruktion aus Holzlatten auf Wände montiert. Bei der Montage entsteht zwischen Platte und Wand ein Luftspalt in der Stärke der Holzlatten. Weiterhin sind Verschraubungsstellen in der Platte markiert. Die Befestigung der Platten an der Unterkonstruktion erfolgt beispielsweise durch Anschrauben oder durch Verklebung. Zwischen Holzlatte und Mauerwerk ist ein 5 mm dicker Dämmstreifen eingelegt. Der Stromfluss erfolgt durch Kupferfolienbänder, die beidseitig der Beschichtung in die carbonfaserhaltige Beschichtung eingebettet werden.

Die WO 2015/076841 A1 offenbart verschiedene Zusammensetzungen. Der Anteil der Flugasche in der Zement-Flugasche Mischung liegt entweder unterhalb von 50 Gew.-% oder ist nicht definiert.

Die EP 2 712 853 A1, die DE 10 2012 000 767 A1, die US 3 626 149 A und die DE 103 24 822 A1 beschreiben jeweils Baustoffmischungen bzw. Zusammensetzungen. Die Baustoffmischungen bzw. Zusammensetzungen enthalten jedoch keine Flugasche.

Die DE 10 2011 007 834 A1 beschreibt eine Baustoffmischung. Der Anteil der Flugasche in der Zement-Kieselsäure-Flugasche Mischung liegt unterhalb von 50 Gew.-%.

Die Veröffentlichungen WU T et al., "A study on electrical and thermal properties of conductive concrete", COMPUTERS & CONCRETE: AN INTERNATIONAL JOU, TECHNO-PRESS, TAEJON, KOREA, Bd. 12, Nr. 3, 1. Januar 2013 (2013-01-01), Seiten 337-349, XP008170651, ISSN: 1598-8198, DOI: 10.12989/CAC.2013.12.3.337 und DATABASE WPI, Week 200040, Thomson Scientific, London, GB, AN 2000-465930, XP002790121, MIODUSHEVSKY P. V.; REVEVSKAYA G. A.; RAPIAH L. N.: "Composite electroconducting material for electrothermal element comprises colloidal graphite electroconducting component, antiplastic filler, and quick cement binder" offenbaren Mischungen. Die Mischungen enthalten keine Flugasche.

Die US 4 301 356 A, die DE 20 2010 012 457 U1 und die WO 2010/130353 A1 offenbaren jeweils Heizeinrichtungen.

Die CA 2 573 739 A1 offenbart eine Mischung aus 60-80 Gew.-% "Coke Breeze" und 40-20 Gew.-% Flugasche. Die Flugasche bildet 100% des Bindemittels.

Die WO 2005/085152 A1 beschreibt verschiedene Trockenmischungen. Der Anteil der Flugasche an dem Bindemittel beträgt ca. 70% bzw. ca. 80%.

Der Erfindung liegt die Aufgabe zugrunde, eine Lösung zu finden, um eine kostengünstige und langlebige elektrische Heizung, die vielfältig, so auch für Außenanwendungen, bei Feuchte und bei Nässe, einsetzbar sein soll, zu schaffen. Die Heizung soll zudem einen hohen Wirkungsgrad aufweisen.

Diese Aufgabe wird durch ein Baustoffgemisch nach Anspruch 1 und einen Heizkörper nach Anspruch 7 gelöst.

Durch die Erfindung wird ein elektrisch leitfähiger und homogener Baustoff geschaffen, der sehr druckfest und langlebig ist und sich besonders gut als elektrischer Heizkörper eignet.

Die Erfindung beruht auf der Erkenntnis, dass durch das Wasser beim Anmischen des Baustoffgemisches der feine elektrisch leitfähige Pulverwerkstoff und das Bindemittel derart aufquellen, dass eine homogene und besonders leitfähige Substanz entsteht. Die elektrische Leitfähigkeit dieser Substanz ist derart beschaffen, dass sogar auf eine Beigabe von Metallspänen oder dergleichen verzichtet werden kann.

Das erfindungsgemäße Gemisch und das Verfahren zu seiner Herstellung ermöglichen ein schwindfrei aushärtendes Baustoffgemisch, das farbecht auch als Heizungsmasse bzw. elektrisch leitfähiges Material nutzbar ist. Es ist möglich, das Baustoffgemisch bereits bei dessen Herstellung einzufärben oder das ausgehärtete Baustoffgemisch nachträglich in der gewünschten Farbgebung zu überstreichen.

Die Erfindung beruht ferner auf dem Gedanken, dass der Pulverwerkstoff, enthaltend ein leitfähiges kohlenstoffmodifiziertes Grafit-Pulver, zusammen mit einem spannungsarm aushärtenden und extrem dicht gelagerten, hydraulisch reagierenden Flugasche-dominanten Bindemittel optimal erhärtet. Das Bindemittel ist "hochverdichtungsfähig". Das Bindemittel erhärtet außerdem bei extrem geringen Wasseranteilen im Bereich Wasser : Bindemittel = 0,15 bis 0,18 selbstverdichtend ohne Zuschlagstoffeinbindung in vorteilhafter Weise zu einer keramikähnlichen homogenen Masse mit hoher Druckfestigkeit oberhalb 100 N/mm² und zwar mit absoluter Wasserundurchlässigkeit und hoher Dichte.

Der Flugascheanteil im erfindungsgemässen Bindemittel beträgt zwischen 50 und 80 Gew.-%.

Bei diesem Bindemittel werden bevorzugt Flugasche-Portlandzementmischungen mit dominantem Flugascheanteil eingesetzt und zwar aktive, leicht quellfähige Flugaschen, die unter Einfluss von Wasser selbständig sich zu hydraulisch stabilen, langzeitstabilen Massen verfestigen lassen und mit handelsüblichen Betonfließmitteln und/oder Betonverflüssigern modifiziert werden können.

Die erfindungsgemäße Lösung schafft einen Baustoff mit optimalem Heizwiderstandcharakter und zwar durch die Verwendung des elektrisch leitfähigen Pulverwerkstoffs und des Bindemittels, über eine Grafiteinbindung in einem so genannten SysCompound^{®}-Superverguß. Das Bindemittel ist zementartig, was hier bedeutet, dass ein mineralischer Systemwerkstoff eingesetzt werden kann. Der Flugascheanteil im erfindungsgemässen Bindemittel beträgt zwischen 50 und 80 Gew.-%.

Mit der Erfindung lassen sich gute elektrische Wirkungsgrade erzielen. Die aufgenommene elektrische Leistung wird zu nahezu 100 % in Wärme umgewandelt, wobei 1 kWh Heizleistung ca. 860 Kcal entspricht. Der erfindungsgemäße Baustoff erlaubt eine großflächige Wärmeabstrahlung, die bei Wohnanwendungen für ein angenehmes Raumklima sorgt.

Gegenüber anderen herkömmlichen Heizwiderständen ist dieser Wert auch praktikabel umsetzbar, weil hierbei erfindungsgemäß eine nahezu 100 % Wärmedirektübertragung möglich ist. Die gute Steuerung einer mit der Erfindung geschaffenen Heizung ermöglicht insbesondere im Niedrigtemperaturbereich nahezu eine perfekte Umsetzung des Wirkungsgrades von 100 %, weil es in diesen Niedertemperaturbereichen hervorragende Dämmmaterialien mit nahezu 100 % Isolierleistungen gibt.

Durch die Erfindung wird auch ein hoher Baustoffausnutzungsgrad erreicht. Der Baustoffausnutzungsgrad ist der Anteil des Baustoffes, der durch die elektrische Durchleitung von Strom als Widerstandsheizung genutzt werden kann. Eine Ausnutzung von nahezu 100 % ist nur möglich, wenn verankerte gut leitfähige Platten als Anfangs- und Endelektrode mit direkter geradliniger Stromleitung verwendet werden, ohne dass sich an diesen Flächen zuvor ein kontaktverschlechternder Bindemittelschleier bilden konnte. Dies bedeutet, dass die Einbindung von vollkontaktierenden Elektroden bei Einbringung des Frischgemisches erfolgen kann. Weitere vorteilhafte Ausführungsformen der Erfindung sind in den abhängigen Ansprüchen angegeben.

Zwar können beliebige Beton- oder Zementwerkstoffe mit dem sehr feinen, leitfähigen Pulverwerkstoff kombiniert werden, der erfindungsgemässe Baustoff für eine universell steuerbare Heizung ist jedoch ein sogenannter Baustoffcompound, der in der Erfindung verwendet wird. Dem mineralischen voreingestellten Baustoffcompound muss lediglich noch Wasser zugesetzt werden, so dass dieser wie ein Baustoff über Verguß-, Spachtel-, oder Schlamme-Anstrich-Verfahren zu einer langzeitstabilen Anwendung als Schicht oder als Block hergestellt werden kann. Durch Anlegen einer Spannung an einen Querschnittsanfang und ein Querschnittsende des hergestellten Baustoffes wird ein effizienter Heizeffekt mit steuerbarer Oberflächenstrahlungswärme erreicht. Die angelegte Spannung kann eine Gleichspannung oder eine Wechselspannung sein, ohne dass ein Wandler erforderlich ist, der den Wirkungsgrad des Systems reduzieren würde. Insofern können beispielsweise Solarmodule direkt angeschlossen werden.

Der elektrische Widerstand des ausgehärteten Werkstoffes ist in vorteilhafter Weise beliebig über die gewählte Rezeptur bzw. Zusammensetzung einstellbar. Ein geringer elektrischer Widerstand ist vorteilhaft, weil so ungefährliche Kleinspannungen (kleiner 120 V DC, 50 V AC) verwendet werden können und trotzdem eine hohe Heizleistung realisiert werden kann. Auch ist die Herstellung von Kochplatten mit Niederspannung, z.B. 220 Volt AC, möglich. Ein hoher elektrischer Widerstand erfordert dagegen eine höhere Spannung. Wird der Anteil an Compoundmasse erhöht, kann die Oberflächentemperatur gesenkt werden, was für Wandflächen- oder Fussbodenheizungen vorteilhaft ist. Die Oberflächentemperatur ist durch Spannungsveränderung und geeignete Regler gut regelbar.

Vorteilhafte Eigenschaften der Compoundlösung sind eine hohe Festigkeit, Wasserundurchlässigkeit, eine gute Wärmeleitfähigkeit, Wärmespeicherfähigkeit, Langlebigkeit, Feuer- und Temperaturbeständigkeit. Diese Parameter sind nahezu beliebig einstellbar durch die Wahl der Rezeptur des durch die Erfindung geschaffenen leitfähigen Compounds und der Möglichkeit einer Ausführung eines Verbundwerkstoffes in Kombination mit dem nichtleitfähigen Produkt SysCompound^{®}.

Durch das absolut wasserundurchlässige, hochfeste und langlebige erfindungsgemäße Baustoffgemisch kann eine Gefährdung von Personen beispielsweise durch eine Feuergefahr infolge des elektrischen Stroms erheblich reduziert werden.

Es können auch Beschichtungsheizungssysteme mit und ohne Wärmedämmuntergrund oder Trägermaterialien in Form eines direkten Anstriches bzw. einer Beschichtung geschaffen werden. Ein mit dem erfindungsgemäßen Baustoff hergestelltes Modul oder eine hergestellte Baustofffläche ist für eine Wand-, Boden-, Unterbau-, Straßen- oder Brückenanwendung sehr geeignet.

Aus dem erfindungsgemäßen Baustoffgemisch können dünnschichtige Heizungssysteme mit hohem Wirkungsgrad geschaffen werden, wobei eine nur geringe Heizkörpermasse erforderlich ist und Schichtdicken bereits ab 0,5 mm, vorzugsweise 0,5 - 2 mm, zur Anwendung kommen können. Dadurch kann Strahlungswärme in eine oder mehrere Richtungen schnell erzeugt werden und damit effektiv zum Einsatz kommen.

Heizkörpersysteme mit dem erfindungsgemäßen, wasserundurchlässigen Baustoffgemisch sind auch im Freien, in Feuchträumen und unter Wasser einsetzbar. Eine Umhüllung, Einbettung und Versiegelung mit einem zweiten nichtleitenden SysCompound^{®} kann analog zu Keramikisolatoren erreicht werden.

Bei einer vorteilhaften Weiterbildung der Erfindung wird der Pulverwerkstoff, nämlich das feinkörnige leitfähige kohlenstoffmodifizierte Grafit-Pulver, zusammen mit dem spannungsarm schwindfrei aushärtenden und dicht gelagerten hydraulisch reagierenden Bindemittel der Bezeichnung SysCompound^{®} zu einer homogenen Mischung vermischt, wobei nach Zugabe von Wasser entsprechend der gewünschten Verarbeitungskonsistenz ein schwindfreies Erhärten des wasserundurchlässigen Dichtbaustoffs entsteht. Erfindungsgemäss ergibt sich eine optimale elektrische Leitfähigkeit und Heizwirkung bei Verhältnissen feinkörniges, leitfähiges, kohlenstoffmodifiziertes Pulver: SysCompound^{®} im Bereich 3:1 bis 1:3. Die Mindestwassermenge für die Verarbeitung eines Gemisches mit einem Verhältnis Pulver: SysCompound^{®} im Bereich 1:3 zu einem weitgehend porenfreien Frischgemisch beträgt etwa 0,4 Masseanteile Wasser : ein Masseanteil Superverguss (SysCompound^{®}). Die Mindestwassermenge für die Verarbeitung eines Gemisches mit einem Verhältnis Pulver: SysCompound^{®} im Bereich 3:1 zu einem weitgehend porenfreien Frischgemisch beträgt etwa 0,18 Masseanteile Wasser : ein Masseanteil Superverguss (SysCompound^{®}). Allgemein gilt, je geringer die Wassermenge für die Verarbeitung zu einem porenfreien, eingebauten Frischgemisch technologisch gewählt werden kann, umso besser werden sowohl die Baustoffeigenschaften als auch die Eigenschaften des Gemisches als einsetzbarer Heizwiderstand.

Das erfindungsgemässe Bindemittel SysCompound^{®} bzw. der erfindungsgemässe mineralische Systemwerkstoff basiert auf der Ausnutzung des gegenüber Zement anders gearteten Verhaltens von aktiven Flugaschen, deren ausgeprägter Quellmechanismus mit gleichzeitiger Vergrößerung der spezifischen Oberfläche im Rahmen der Wasserkontaktierung zu einer Druckverfestigung des Flugasche-Leimes mit ständig zunehmender Verdichtung und Verfestigung des Gefüges führt. Dieses Verhalten muss als "Flugasche dominant" verstanden werden. Wird als Aktivator und Beschleuniger Zement zugemischt, dann darf das für Zement dominante Schwindverhalten (Volumenverkleinerungsreaktionen) durch Einbettung der Zementpartikel in die volumenmäßig dominante Wirkung der Flugasche im Leim (Wasser + Flugasche + Zement) ohne gegenseitige Verkettung und Verkittung der Zementpartikel nicht zur Volumenverkleinerung des Gesamtleimes führen, da der Mehrheitsleim (volumenmäßig) der anfangs stärker wasserbindenden Flugasche dem Zementschwinden entgegensteht.

Der Begriff "Flugasche dominant" bedeutet damit nicht automatisch mehrheitlich einen Flugascheanteil im SysCompound^{®}, da auch noch Additive und Faserzusätze eine Rolle spielen können, sondern bezieht sich nur auf den Flugasche- bzw. Flugasche-Zement-Leim, bei dem das dominierende Flugascheverhalten zum Tragen kommen wird. Werden dem SysCompound^{®} noch trockene Sandmischungen zugefügt (Einbindesystem), dann besitzt in diesen Fertigcompounds die Flugasche keine Dominanz, da dann die Zuschlagstoffe dominant sind, obwohl auch diese Gemische bei der Anwendung im Bindemittel-Leim durch Flugasche-Volumendominanz als SysCompound^{®} reagieren. Dem Bindemittel SysCompound^{®} können bis zu 1,2 Gew.-% Additive zugesetzt werden, welche das Verdichtungs- und Fließverhalten, das Klebe- und Verbundverhalten und das Wasserhaltevermögen verbessern.

Der mineralische Systemwerkstoff ist also als "Flugasche dominant" gekennzeichnet.

Der Flugascheanteil im erfindungsgemässen Bindemittel beträgt zwischen 50 und 80 Gew.-%.

Als Bindemittel können auch Zemente mit Zumahlstoffen eingesetzt werden, die Flugaschen oder dem Flugascheverhalten ähnliche Komponenten erhalten. Setzt man diese Zemente gemeinsam mit Flugasche ein, dann kann der Zementanteil höher als der Flugascheanteil sein, wobei der "verdünnte" Zement dennoch nicht dominant ist, sondern vielmehr die Flugasche.

Erfindungsgemäss anwendbar für Baustoffheizsysteme sind Bindemittel wie das vorerwähnte SysCompound^{®}, die Flugaschen als dominante Komponente enthalten. Die Flugasche weist eine geringe und gut beherrschbare Quellfähigkeit auf. Sie verspannt unter einer ständigen Wasserlagerung den Baustoff mit einer Druck-Endfestigkeit größer als 5 N/mm².

Das Bindemittel SysCompound^{®} hat Vorteile in Bezug auf Variabilität bzw. Dimensionierbarkeit, Erhärtung, Gefüge, Wasserdurchlässigkeit, Schadstoffspeichervermögen und Schadstoffkapselung, Klebekraft, schwindfreies Aushärten und Recyclebarkeit. Das Bindemittel SysCompound^{®} ist vorzugsweise das Bindemittel SysCompound^{®} SV, SVi oder SVii mit überwiegend Verdichtungs- und Fließverhalten verbessernden Additiven und kann bezogen werden beispielsweise über die Firmen Consulta GmbH, Nußbergstraße 31, 94234 Viechtach, SysCoFox Baustoffhandel, Rosenstraße 18, 03130 Spremberg.

Bei einer weiteren vorteilhaften Ausgestaltung der erfindungsgemäßen Lösung ist vorgesehen, dass das Baustoffgemisch metallfrei, insbesondere metallfaserfrei oder spanfrei ist. Dies ist möglich, weil keine schwindminimierenden und rissüberbrückenden bzw. leitungsüberbrückenden Stahlfasern bzw. Metallspäne benötigt werden, die aber bei bekannten Lösungen für eine Stromleitung erforderlich sind. Hochtemperaturanwendungen sind möglich, da auf Metall im Gemisch verzichtet werden kann. Metall, wie Stahl, kann bei sehr hohen Temperaturen zu Problemen führen, da sich seine Festigkeitseigenschaften verändern können.

Eine andere vorteilhafte Weiterbildung der Erfindung zeichnet sich dadurch aus, dass der Grafit enthaltende Pulverwerkstoff aus einem Primärgrafit mit einem Kohlenstoffgehalt von 90 bis 99 Gew.-% und einem Sekundärgrafit aus einem anderen Mahlgut mit geringerem Kohlenstoffgehalt, wie Recyclinggrafitpulver, besteht. Das Sekundärgrafit kann Grafitstaub aus Abscheideanlagen, zu beziehen beispielsweise über die Firma Mersen Deutschland Suhl GmbH, Suhl, Deutschland, oder isostatischer Grafit mit maximal 5 Gew.-% extrudiertem Grafit sein. Das Sekundärgrafit sollte einen Feuchtigkeitsgehalt von weniger als 7 Gew.-% aufweisen. Je höher die Reindichte des in Pulverform vorliegenden Grafits ist, umso besser werden die Baustoffeigenschaften und die Eigenschaften des Gemisches als ausnutzbarer Heizwiderstand. Die Reindichte sollte generell oberhalb 2 g/cm³ liegen. Vorzugsweise hat der vorerwähnte Pulverwerkstoff eine Teilchengröße < 0,09 mm.

Grafit ist ein Mineral und eine der natürlichen Erscheinungsformen des chemischen Elements Kohlenstoff in Reinform.

Vorteilhaft ist die elektrische Leitfähigkeit von frischem Grafit, welcher aufgemahlen wurde und z.B. aus der Ragedara-Mine auf Sri Lanka stammt. Die elektrische Leitfähigkeit dieses Grafits ist deutlich höher als die elektrische Leitfähigkeit von Recyclinggrafitpulver. Bei gleichen Einbindegraden von Grafit im verwendeten Supervergußcompound sorgt das frische Grafit für höhere Stromstärken, was eine höhere Heizleistung ergibt. Das Recyclinggrafitpulver erbringt die gleiche Heizleistung erst bei höheren Spannungen, was in vielen Anwendungsfällen ein Hindernis sein kann, wie z.B. bei zu geringer vorhandener Spannung. Die Spannung ist begrenzt beispielsweise bei der Verwendung von Batterien und Akkumulatoren, Solarmodulen und durch Normen hinsichtlich einer Gefährdungsvermeidung (Stromschlag).

Die elektrische Leitfähigkeit von Grafiteinbindungen mit maximalem Grafitanteil (Grafit/Supervergußcompound ≥ 2) ist deutlich höher als die elektrische Leitfähigkeit von Grafiteinbindungen mit minimalem Grafitanteil (Grafit/Supervergußcompound ≤ 0,5), weshalb bei hohen Einbindegraden von Grafit im Supervergußcompound auch bei geringeren Spannungen die erforderliche Heizleistung erbracht wird. Bei niedrigen Einbindegraden von Grafit im Supervergußcompound sind dagegen hohe Spannungen erforderlich, um die erforderliche Heizleistung zu erbringen.

Genau umgekehrt zur elektrischen Leitfähigkeit verhält es sich in Bezug auf die Baustoffeigenschaften, die die schlechtesten Parameter hinsichtlich Festigkeit und Abrieb bei Grafiteinbindungen mit maximalem Grafitanteil (Grafit/Supervergußcompound ≥ 2) aufweisen. Die besten Parameter hinsichtlich Festigkeit und Abrieb bei Grafiteinbindungen ergeben sich bei minimalem Grafitanteil (Grafit/Supervergußcompound ≤ 0,5).

Generell verbessern gute Herstellungs- und Einbaubedingungen der Grafiteinbindungen im SysCompound^{®}-Verguss die Baustoffparameter bzw. -eigenschaften. Diese Bedingungen basieren beispielsweise auf einer höheren Frischgemischdichte und einer höheren Homogenität nach Einbau bzw. Verarbeitung. Die Baustoffparameter der Grafit - SysCompound^{®}-Verguss - Einbindesysteme können auch durch Voll- bzw. Oberflächenversiegelungen mit SysCompound^{®}-Superverguß mit und ohne Zuschläge (ohne Grafit-Einbindung) beträchtlich verbessert werden, so dass selbst bei hohen Leitfähigkeiten und Heizleistungen ein baustofftechnisch-hochfestes System zum Einsatz kommen kann, wobei die Versiegelungen gleichzeitig als perfekter Isolator mit sehr hoher Wärmeübertragung wirken.

Der Heizwiderstandscharakter der SysCompound^{®}-Verguss - Grafit - Einbindungen ist hinsichtlich Wirkungsgrad, Anwendbarkeit und Steuerbarkeit unabhängig davon, ob Gleichspannung (DC) oder Wechselspannung (AC) angelegt wird. Demzufolge kann auf einen Einsatz von Wandlern, z.B. AC/DC oder DC/AC-Wandler, bei Ausnutzung von Gleichstrom verzichtet werden.

Als Grenzwerte der Ausnutzung der SysCompound^{®}-Verguss - Grafit - Einbindungen mit Heizwiderstandscharakter und gleichzeitigem stabilen Baustoffcharakter gelten vorteilhaft:
Grafit: SysCompound^{®}-Verguss ≤ 3 und ≥ 0,33.

Hinsichtlich Volumen und Fläche von SysCompound^{®}-Verguss - Grafit - Einbindungen mit Heizwiderstandscharakter und gleichzeitigem stabilen Baustoffcharakter empfiehlt es sich, diese in überschaubaren Segmenten, bzw. Modulen, herzustellen, um dadurch große Schäden mit Stromflußunterbrechungen zu vermeiden (nur ein Segmentausfall). Eine gute Ausnutzung der Grenzen hinsichtlich Strom- und Spannungsmaxima kann bei Reihen- und Parallelschaltungen bzw. kombinierten Schaltungsanordnungen erreicht werden. Dadurch werden vorhandene elektrische Quellen optimal und maximal ausgenutzt. Die Spannungsquellen können Kleinspannungen aufweisen, d.h. bei Wechselstrom kleiner 50 Volt und größer als 120 Volt bei Gleichspannungen, so dass gefährliche Berührungsspannungen verhindert werden. Ebenso kann durch die Grafiteinbindung mit sehr feinen Teilchen auf Trenntransformatoren und sonstige Sicherheitsmaßnahmen verzichtet werden.

Einzelnen geschaltete, grafithaltige Module können bei Bedarf in einer größeren Flächen- bzw. Volumeneinheit durch allseitige Umhüllung mehrerer Segmente in einem Großsegment mittels Supervergußcompound zusammengefasst werden. Auch ist eine Kapselung bzw. elektrische Isolation und eine verbesserte Stabilität der Gesamteinheit möglich. Alle ausgehenden Kontakte können isolierend allseits umhüllt werden.

Der Grafitanteil im Fertigbaustoff beträgt 10 bis 70 Gew.-%.

Besonders vorteilhaft ist es, wenn nach einer bevorzugten Ausführungsform des erfindungsgemäßen Baustoffgemisches, die Teilchengröße des Grafit- bzw. Pulverwerkstoffes, wie zuvor erwähnt, kleiner als 0,09 mm ist. Insbesondere wird Staub als Grob- oder Feinstaub eingesetzt. Die Partikelgröße beträgt mindestens 0,01 mm (Feinstaub). Eine bevorzugte Partikelgröße beträgt 0,02 bis 0,07 mm, besonders bevorzugt 0,03 bis 0,05 mm.

Bei einer weiteren bevorzugten Weiterbildung der Erfindung enthält das Baustoffgemisch zusätzlich Sand, insbesondere Quarzsand, bzw. ein Sandgemisch.

Durch eine bevorzugte Quarzeinbindung wird die Wärmeleitfähigkeit in einfacher und kostengünstiger Weise verbessert. Durch die gute Wärmeleitfähigkeit des eingebundenen Quarzsandes in die Matrix aus in dem Supervergußcompound eingebundenem Grafit, erfolgt eine gute Wärmeübertragung an die Oberfläche des Baustoffes, also an die Luftgrenzfläche, die erwärmt werden soll. Durch die Quarzeinbindung können zusätzliche Bindemittel und Grafitkosten eingespart werden. Der Quarzanteil sollte im Baustoffgemisch zur Begünstigung einer gleichmäßigen Verteilung und Erzielung eines homogenen Gemisches im Körngrößenbereich von 0 bis 2 mm liegen sein, wobei ein maximaler Quarzanteil zwischen 75 Gew.-% (bei Grafit/Supervergußcompound ≤ 0,5) und 50 Gew.-% (bei Grafit/Supervergußcompound ≥ 2) liegen kann. Der Quarzanteil im fertigen erfindungsgemäßen Baustoffgemisch beträgt also zwischen 0 und 70 Gew.-%.

Werden dem Compound bzw. dem Bindemittel noch trockene Sandmischungen beigefügt (Einbindesystem), besitzt in diesen Fertigcompounds die Flugasche keine Dominanz, da diese Zuschlagstoffe dann dominant sind, obwohl auch diese Gemische bei der Anwendung im Bindemittelleim durch Flugasche-Volumendominanz wie das SysCompound^{®} reagieren. Das heißt, die Beigabe von Sand bzw. einer Sandmischung kann eine Flugasche-Dominanz ersetzen bzw. ergänzen. Dadurch können die Eigenschaften hinsichtlich Stabilitäts- und Verbundverhalten des SysCompound^{®} weiter verbessert werden.

Sehr zweckmäßig ist es außerdem, um das Baustoffgemisch hinsichtlich seines Stabilitäts- und Verbundverhaltens zu verbessern, wenn das Gemisch zusätzlich Kohlenstofffasern enthält. Vorzugsweise besteht das fertige Gemisch aus maximal 2 Gew.-% Kohlenstofffasern.

Es können, wie zuvor erwähnt, alternativ oder zusätzlich andere Additive beigemengt werden, um das Verdichtungs- und Fließverhalten, das Klebe- und Verbundverhalten und/oder das Wasserhaltevermögen zu verbessern. Vorzugsweise besteht das fertige Gemisch aus maximal 1,5 Gew.-% dieser zusätzlichen Additive.

Für alle Einsatzbereiche des erfindungsgemäßen Baustoffgemisches gilt, dass eine hohe Festigkeit und eine hohe Heizwirkung erzielbar sein sollen. Dies kann durch die erwähnten Kohlenstofffasern in Verbindung mit dem SysCompound^{®} erreicht werden, wenn nach Intensivvermischung und nach Erreichung eines Flüssigzustandes eine hohe Gemischdichte bei geringer Wassermenge erzielt wird.

Eine Verbesserung der Festigkeitswerte insbesondere des Elastizitätsmoduls und damit des "Ausdehnungs-/Arbeitsvermögens" des ausgehärteten Baustoffgemisches und eine effektive Hochleistungstemperatursteuerung wird durch die Einbettung der Kohlenstofffasern erreicht. Diese können in Form von eingemischten Fasern und/oder durch Kohlenstoffmatten oder ähnliche Kohlenstoff-Faserstrukturen eingebettet werden.

Durch die Erfindung kann leicht auch ein Heizkörper mit einem solchen Baustoffgemisch geschaffen werden. Dieser besteht vorzugsweise aus einem leitfähigen Baustoffgemisch und einem nicht leitfähigem Baustoffgemisch, insbesondere einem SysCompound^{®}-Baustoff, vorzugsweise zur Umhüllung, Einbettung und/oder Beschichtung.

Die erfindungsgemäße "Baustoffheizung" mit dem erfindungsgemäßen Baustoffgemisch kann schwindfrei aushärten und weist ein hohes Haftvermögen auf. Schäden durch mechanische Überbeanspruchungen oder sonstige Angriffe können jederzeit einfach und ohne Änderung der Heizungs- und Baustoffeigenschaften ausgebessert werden. Die Mischung, die zur Heizungsherstellung verwendet wird, kann auch für eine Sanierung eingesetzt wird. Es ergibt sich also ein einfach reparierbares Heizungssystem.

Vorteilhafterweise kann die Heizung durch Auftragen des angemischten Baustoffgemisches mit Kelle/Spachtel oder durch Aufspritzen oder durch Verdichtungseinwirkungen auf eine Fläche (Wand, Boden oder Fertigungsfläche) entstehen, da das mit Wasser vermischte Gemisch gut verarbeitbar ist.

Die Baustoffheizung stellt einen beständigen Dichtbaustoff dar, der mit oder ohne Supervergußumhüllung sogar unter Wasser, aber auch in aggressiven Medien zum Einsatz kommen kann.

Nach Anlegen einer Spannung an mit dem ausgehärteten Baustoffgemisch verbundenen Elektroden ist an den Berührungsflächen der Baustoffheizung nur ein kleiner Restanteil der Spannung noch messbar (< 40 %), was die Anwendersicherheit auch ohne schützende Umhüllung garantiert.

Bei einem Einsatz des erfindungsgemäßen Baustoffheizkörpers unter Wasser verändern sich die mechanischen und elektrischen Eigenschaften der Heizung nicht. Es gibt auch keine "Kurzschlussreaktionen" durch das Wasser, selbst wenn die nichtisolierten Anschlusselektroden sich unter der Wasseroberfläche befinden. Der Strom fließt durch den geringen elektrischen Widerstand im Wesentlichen durch den Baustoffheizkörper und nicht über das Wasser zu den Elektroden. Aus Sicherheitsgründen sollte aber darauf geachtet werden, dass Berührungsspannungen unter 50 Volt Wechselspannung bzw. 120 V Gleichspannung an allen Stellen und damit auch an den Elektroden anliegen. Alternativ kann ein Trenntrafo und/oder eine Umhüllung, insbesondere eine SysCompound^{®}-Superverguß-Schutzumhüllung eingesetzt werden.

Nachfolgend werden Ausführungsbeispiele des Erfindungsgegenstandes, dessen Einsatz sowie weitere Vorteile beschrieben.

### Es zeigen:

- Fig. 1: eine schematische perspektivische Darstellung eines plattenartigen Heizungsmoduls, das mit dem erfindungsgemäßen Baustoffgemisch gefertigt worden ist und über die gesamte Plattenlänge eingegossene elektrische Kontakte aufweist,
- Fig. 2: eine schematische perspektivische Darstellung eines anderen plattenartigen Heizungsmoduls, wobei die elektrischen Kontakte an Außenflächen bzw. an Längskanten des Moduls angeordnet sind,
- Fig. 3: eine schematische perspektivische Darstellung eines weiteren plattenartigen Heizungsmoduls, wobei die elektrischen Kontakte auf einer großen Oberfläche des Moduls linien- oder streifenartig angeordnet ist,
- Fig. 4: eine schematische Darstellung einer Reihen- und Parallelschaltungsanordnung von plattenartigen einzelnen Heizungsmodulen,
- Fig. 5: eine schematische Seitenansicht einer auf eine Wand aufgetragenen Heizungsschicht, und
- Fig. 6: ein elektrisches Schaltbild einer elektrischen Heizung.

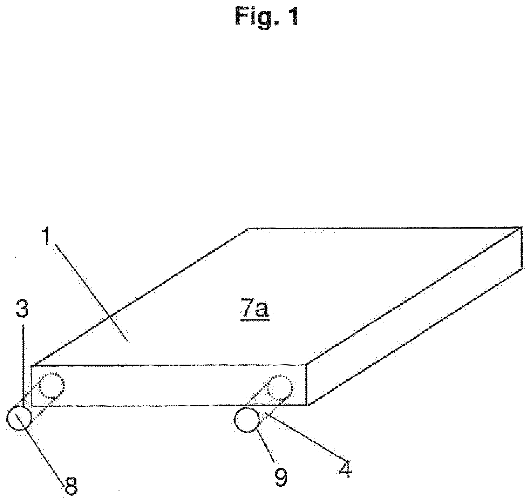

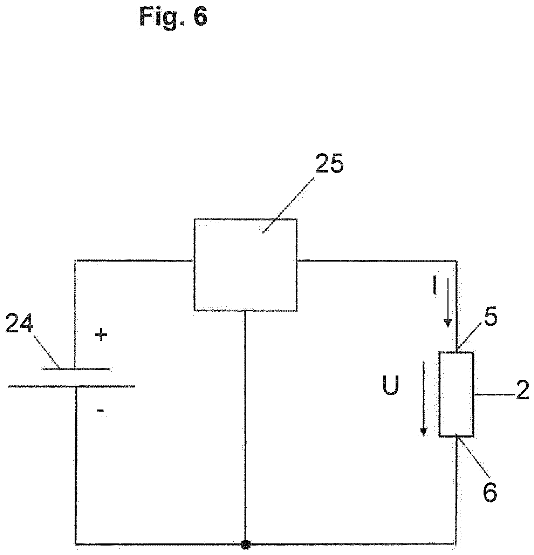

In den folgenden Ausführungsbeispielen wird ein Baustoffgemisch 1, beispielhaft dargestellt in den Fig. 1, 2, 3, 5, zur Verwendung als elektrisches Heizungswerkstoffgemisch eingesetzt. Dieses umfasst einen unter Zugabe von Wasser aushärtbaren, als Bindemittel wirkenden Baustoff und einen vorher zugefügten, auf Kohlenstoff basierenden, elektrisch leitfähigen, feinen Pulverwerkstoff. Das ausgehärtete Baustoffgemisch 1 bildet einen elektrischen Heizungswiderstand 2 (Fig. 6) zwischen mehreren elektrischen Polen 3, 4 bzw. Anschlüssen 5, 6, so dass sich das Baustoffgemisch 1 beim Anlegen einer Spannung U an den Polen 3, 4 bzw. Anschlüssen 5, 6 infolge des durch das Baustoffgemisch 1 fließenden elektrischen Stroms I erwärmt.

Das Bindemittel ist ein mineralischer Systemwerkstoff, welcher ein Flugasche-dominanter Werkstoff ist, wie beispielsweise das Produkt SysCompound^{®}. Der Flugascheanteil im erfindungsgemässen Bindemittel beträgt zwischen 50 und 80 Gew.-%. Das Baustoffgemisch 1 ist metallfrei, insbesondere metallfaserfrei. Der Pulverwerkstoff besteht aus Grafit, insbesondere aus einem Primärgrafit mit einem Kohlenstoffgehalt von 90 bis 99 % und aus einem Sekundärgrafit basierend auf einem anderen Mahlgut mit geringerem Kohlenstoffgehalt. Die Teilchengröße des Pulvergrafits ist kleiner als 0,09 mm. Das Baustoffgemisch 1 enthält zusätzlich Sand, insbesondere Quarzsand, oder ein Sandgemisch. Es kann zusätzlich Kohlenstofffasern aufweisen.

### Beispiel 1:

Das folgende Beispiel betrifft eine erste Ausführungsform des erfindungsgemäßen Baustoffgemisches 1.

Das Baustoffgemisch 1 umfasst Grafitpulver mit einem Anteil von 10 bis 30 Gew.-% (0,05 bis 0,2 Wasseranteile) bezogen auf einen Masseanteil des Bindemittels SysCompound^{®} und wird mit Anmachwasser nach intensivem Mischvorgang zu einer breiigen bis selbstnivellierenden Mischung verarbeitet. So entsteht ein sehr schwach leitfähiges, spannungsarm aushärtendes, homogenes Baustoffgemisch 1 ohne Harrrissstruktur. Das Baustoffgemisch 1 weist auch bei Zuschlagstoffeinmischung bis zu 2 Masseanteilen an Zuschlagstoff bezogen auf das Grafit-SysCompound^{®}-Baustoffgemisch eine dunkle Tönung auf. Diese reicht von grau bis anthrazit bzw. schwarz, wobei diese Einfärbung sich als wasser- und umweltstabil erwiesen hat. Dieses Baustoffgemisch ohne elektrische Kontakte und ohne angelegte Spannung ist selbst ohne Zuschlagstoffeinmischung als farbiges Beschichtungssystem sowie bei höheren Grafitpulveranteilen als ableitfähige Fläche einsetzbar.

### Beispiel 2:

Das folgende Beispiel betrifft eine zweite Ausführungsform des erfindungsgemäßen Baustoffgemisches.

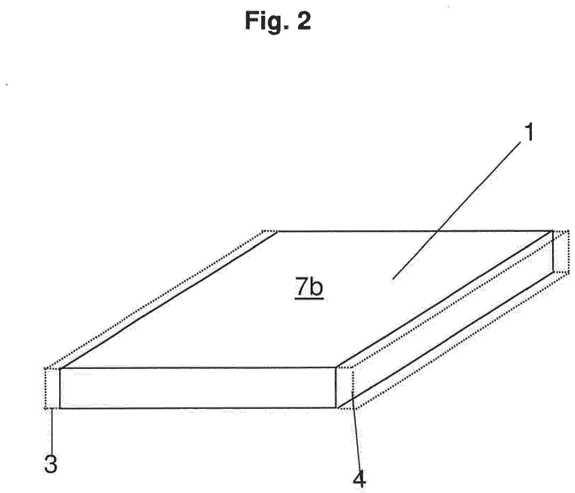

Dieses Baustoffgemisch 1 umfasst Grafitpulver mit einem Anteil von 30 bis 60 Gew.-% (0,3 bis 0,6 Masseanteile) bezogen auf einen Masseanteil des Bindemittels SysCompound^{®} und wird ebenfalls mit Anmachwasser nach intensivem Mischvorgang zu einer breiigen bis selbstnivellierenden Mischung verarbeitet. Es entsteht ein schwach leitfähiges, spannungsarm aushärtendes, homogenes Baustoffgemisch ohne Harrrissstruktur, das selbst bei Zuschlagstoffeinmischung von bis zu 2 Masseanteilen an Zuschlagstoff bezogen auf das Grafit-SysCompound^{®}-Baustoffgemisch noch vorteilhaft ist. Das Baustoffgemisch 1 hat eine dunkle Tönung und ist elektrisch schwach leitfähig mit einer elektrischen Leitfähigkeit, die für Fußbodensysteme geeignet ist. Das Baustoffgemisch 1 ist wegen seiner ausreichenden Beanspruchbarkeit (Abrieb, Druck- und Biegespannungen) für Fußbodensysteme geeignet. Nach Anlegen einer Spannung an zwei Parallelseiten (siehe z.B. Fig. 2) oder an Anfangs- und Endseiten fließt zur Wärmeerzeugung ein Strom durch den in Fig. 6 dargestellten Heizungswiderstand 2. Bei diesem Beispiel sind größere Spannungen im Bereich von 100 bis 380 V erforderlich, die allerdings nur sehr kleine, ungefährliche Stromflüsse benötigen, um mit einem hocheffektiven Verhältnis von eingespeister Energie zu abgegebener Energie Wärme zu erzeugen. Diese Systeme sind einsetzbar als Anstrich-, Dünnbett-, Baukörper-, beispielsweise für Säulen, Wandflächen-, Fließen- und sonstige Baustoffmassen im Niedertemperaturbereich von 20 bis 60°C. Sie sind geprägt durch hohe Druckfestigkeiten im Bereich von 25 bis 60 N/mm², wobei sich ein gutes Biegezugverhalten und ein hohes Dehnvermögen durch ein rissfreies, ungestörtes und homogenes Feinstkorngefüge ergibt.

### Beispiel 3:

Das folgende Beispiel betrifft eine dritte Ausführungsform des erfindungsgemäßen Baustoffgemisches.

Dieses Baustoffgemisch 1 umfasst Grafitpulver mit einem Anteil von 60 bis 120 Gew.-% (0,6 bis 1,2 Masseanteile) bezogen auf einen Masseanteil des Bindemittels SysCompound^{®} und wird ebenfalls mit Anmachwasser nach intensivem Mischvorgang zu einer breiigen bis selbstnivellierenden Mischung verarbeitet. Es entsteht ein besser leitfähiges, spannungsarm aushärtendes, homogenes Baustoffgemisch ohne Harrrißstruktur, das selbst bei Zuschlagstoffeinmischung von bis zu 2 Masseanteilen an Zuschlagstoff bezogen auf das Grafit-SysCompound^{®}-Baustoffgemisch vorteilhaft ist. Es hat auch eine dunkle Tönung und wird nach Anlegen einer Spannung als stärker leitfähiges Gemisch zur stärkeren Wärmeerzeugung vorzugsweise im Bereich von Wandheizungen eingesetzt. Hierfür sind Spannungen von nur 10 bis 100 Volt erforderlich, die allerdings hier zu höheren Stromflüssen bei insgesamt geringer Leistung führen. Diese hocheffektiven Systeme sind anwendbar als Anstrich- (nicht auf brennbaren oder schmelzenden Untergründen), Dünnbett- (nicht auf brennbaren oder schmelzenden Untergründen), Baukörper-, beispielsweise für Säulen, Wandflächen-, Fließen- und vergleichbare Baustoffmassen im Mitteltemperaturbereich von etwa 60 bis 200°C. Sie sind geprägt durch mittelhohe Druckfestigkeiten im Bereich von 10 bis 30 N/mm², wobei sich auch hier ein gutes Biegezugverhalten und ein hohes Dehnvermögen durch ein rissfreies, ungestörtes und homogenes Feinstkorngefüge ergibt.

### Beispiel 4:

Das folgende Beispiel betrifft eine vierte Ausführungsform des erfindungsgemäßen Baustoffgemisches.

Dieses Baustoffgemisch 1 umfasst Grafitpulver mit einem Anteil von 120 bis 300 Gew.-% (1,2 bis 3 Masseanteile) bezogen auf einen Masseanteil des Bindemittels SysCompound^{®} und wird mit Anmachwasser nach intensivem Mischvorgang zu einer breiigen bis selbstnivellierenden Mischung verarbeitet. Es entsteht ein leitfähiges, spannungsarm aushärtendes, homogenes Baustoffgemisch ohne Harrrißstruktur mit dunkler Tönung wie bei den vorhergehenden Beispielen. Dieses Baustoffgemisch dient allerdings als stärker bzw. hochleitfähiges Gemisch mit elektrischen Leitfähigkeiten im Bereich Hochtemperaturanwendungen. Es sind sehr geringe Spannungen von 1 Volt bis 10 V erforderlich, die allerdings jetzt zu sehr hohen Stromflüssen führen.

Diese Systeme sind einsetzbar als Heizkörper, wie sie im Beispiel 3 angegeben sind, jetzt allerdings im Hochtemperaturbereich von etwa 200 °C bis 1000 °C arbeiten. Sie sind geprägt durch geringere Druckfestigkeiten im Bereich von 3 bis 10 N/mm², wobei sich aber noch ein ausreichendes Biegezugverhalten und ein ausreichendes Dehnvermögen durch rissfreies, ungestörtes und homogenes Feinstkorngefüge ergibt.

Fig. 1 zeigt einen plattenförmigen Heizkörper 7a mit einer rechteckförmigen Form und einer langen und einer kurzen Seite. Möglich sind auch andere Formen, wie Quadrate, Dreiecke, Sechs- oder Mehrecke, Kreise, Ellipsen, Stern-, Herz- und Bildmotivformen und andere zweidimensionale Gestaltungen. Gemäß Fig. 1 sind Kontaktstäbe 8, 9 mit rundem Querschnitt als elektrische Anschlüsse 5, 6 (siehe Fig. 6) bzw. Pole 3, 4 (siehe Fig. 1) im Bereich der Schmalseiten in der Nähe der Längsseiten eingegossen. Die Längsseitenanordnung der Anschlüsse bzw. Pole erlaubt gegenüber einer Schmalseitenanordnung einen geringeren elektrischen Widerstand und eine höhere Heizleistung bzw. eine geringere Spannung bei gleicher Heizleistung.

Fig. 2 zeigt einen rechteckigen Heizkörper 7b, jedoch mit außen an den Längsseiten liegenden Polen 3 und 4, die einen Rechteckquerschnitt haben. Dadurch können Heizmodule aneinander gereiht und leicht in Reihe ohne Zusatzleitungen untereinander geschaltet werden. Da der Heizkörper an sich leitend ist, können grundsätzlich auch Reihen-, Parallel- und Kombinationsschaltungen ohne Zwischenkontakte gebildet werden.

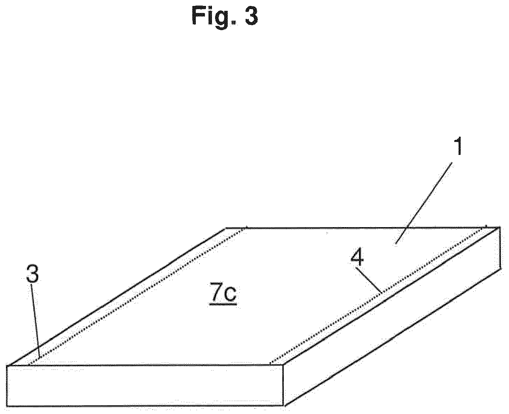

Fig. 3 zeigt einen Heizkörper 7c, jedoch mit außen liegenden, ober- oder unterseitig angeordneten Polen 3 und 4, die streifen- oder bandförmig ausgebildet und auf einer Ober- bzw. Unterseite des Plattenmoduls angeordnet sind. Ein solcher Heizkörper könnte zuerst an einem Boden oder einer Wand befestigt, insbesondere aufgeklebt, werden und wesentlich länger als ein üblicher Einzelmodul ausgebildet sein. Er kann auch mehrere Module umfassen.

Jeder der Kontakte besteht üblicherweise aus Metall, wie Kupfer, Eisen oder Stahl, mit oder ohne Zusätze.

Die Heizkörper 7a bis 7c können Module einer Fußboden- oder Wandheizung sein.

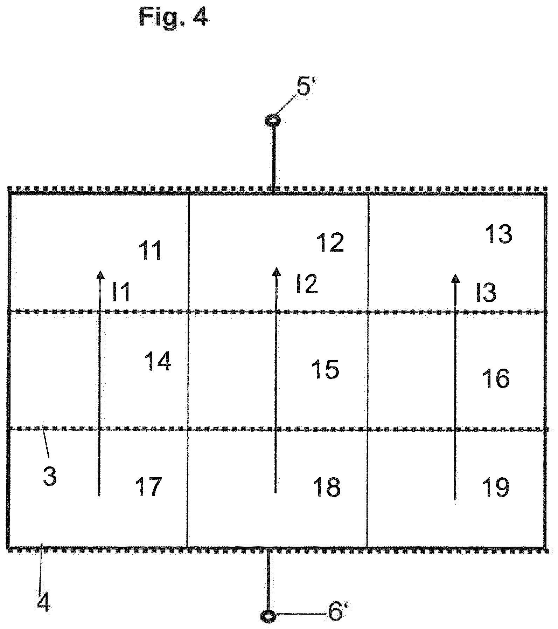

Fig. 4 zeigt eine Kombinationsschaltung mit neun Modulen 11 bis 19 mit Gesamtanschlüssen 5' und 6'. Die Module haben Kontakte bzw. Pole 3 und 4, welche in Fig. 2 gestrichelt dargestellt sind. Die Module 11, 14, 17 sind in Reihe geschaltet mit dem Teilstrom I1. Die Module 12, 15, 18 sind in Reihe geschaltet mit dem Teilstrom I2. Die Module 13, 16, 19 sind in Reihe geschaltet mit dem Teilstrom I3. Diese Reihenschaltungen sind untereinander parallel geschaltet. Zwischen seitlich benachbarten Modulen, siehe beispielsweise die Module 11 und 12, muss keine elektrische Isolierung vorhanden sein. Die Heizleistung kann bei gleicher Spannung durch Anordnung und Schaltung der Module und eine Kontaktanordnung (veränderter Leitungsweg) variieren.

Je nach gewähltem System entsprechend einem der vorgenannten Beispiele 2 bis 4 erfolgt bei Bedarf eines aus mehreren Teilsegmenten (Teilplatten, Teilflächenbeschichtungen oder Fliesen) bestehenden Systems die Festlegung der Schaltungsanordnung bzw. der Module. Systeme mit geringer Spannungsaufnahme, wie im Beispiel 3 und zum Teil auch im Beispiel 2, werden in Parallelschaltung zusammengefasst. Systeme mit hoher Spannungsaufnahme werden dagegen vorzugsweise als Reihenschaltung zusammengeführt.

Das Baustoffgemisch 1 kann also in Form von Heizungsmodulen bzw. einer Modullösung eingesetzt werden. Durch maximale Ausnutzung der vorhandenen Spannungsquellen und der diesbezüglich maximal möglichen Stromflüsse (Sicherungen) ist bei derartigen Modulen eine maximale Wärmeerzeugung möglich.

An alle Heizbaustoffsysteme kann sowohl Gleichspannung als auch Wechselspannung (zwei- oder dreiphasig) angelegt werden.

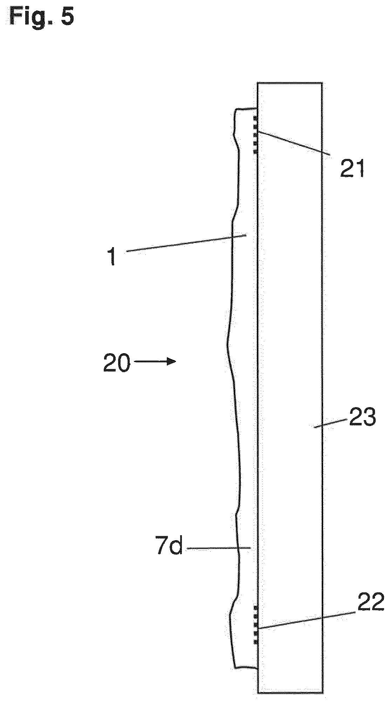

Fig. 5 zeigt ein Ausführungsbeispiel in Form einer Wandheizung 20. Der zu formende Heizkörper 7d wird beispielsweise durch eine Farbrolle oder eine Glättkelle, je nach Konsistenz, aufgetragen. Zuvor werden die streifenförmigen Metallkontakte 21, 22 bzw. Pole 3, 4 auf die Wand 23 geklebt. Die Dicke des Heizungsmaterials ist in Fig. 5 stark übertrieben unterschiedlich gezeichnet, um den Auftragungscharakter zu verdeutlichen. Eine ähnliche Technik könnte auch bei einer Fußbodenheizung zur Anwendung kommen, wobei der Heizkörper bei geeigneter Konsistenz nach dem Anmischen auch gegossen oder aufgespritzt werden könnte.

Fig. 6 zeigt ein Schaltbild einer Heizung mit elektronischer Temperaturregelung. Hierbei wird eine Gleichspannungsquelle 24 mit einem zwischengeschalteten Regler 25 an dem Heizwiderstand 2 angeschlossen. Der Regler 25 ist an den Minuspol - und den Pluspol + der Gleichspannungsquelle 24 angeschlossen. Der Regler 25 umfasst z.B. einen Temperatursensor zur Erfassung einer Ist-Temperatur und ist mit einem Soll-Temperatureinstellungsmittel zur Regelung einer Raumtemperatur oder einer anderen zu regelnden Temperatur versehen. Auch elektromechanische Lösungen, z.B. in Form einer Bimetallregelung, können verwendet werden.

Die vorgenannten Beispiele 1 bis 6 können mit den in den Fig. 1 bis 6 dargestellten Ausführungsformen und/oder mit den folgenden Merkmalen beliebig miteinander kombiniert werden.

Es sind zahlreiche Anwendungen im Anstrich-/Dünnbettbereich oder bei Baustoffnutzungen denkbar. Möglich sind Ausgestaltungen als ableitfähige Flächen für Böden und Arbeitsflächen, Fußbodenheizungen in Platten- oder Anstrichform, Deckenheizungen und Wandheizungen in Platten- oder Anstrichform, Patronenheizungen für Stapel- oder Beckenerwärmungen, Sitzbankheizungen, Straßen-, Einfahrts- und Brückenabschnittsheizungen, Kombinationsheizungen im Zusammenhang mit Solarzellen. Möglich sind außerdem Ausgestaltungen als Heizsäule, beschichtete Wandplattenheizungen, Fußbodenheizungen mit Wärmedämmung, mit Temperatursteuerungen von Intensivfischzuchtbecken oder Aquarien, Frostfreihaltungen und Temperierungen von Ökoteichen und Biotopen mit Lebewesen, mit Wassertemperatursteuerungen (auch als nachträgliche Sanierungsmaßnahme) von Schwimmbecken und Badelandschaften, Frostfreihaltung von Verkehrsflächen, wie Einfahrten, Brückenabschnitten und besonders gefährdeten Straßenabschnitten, sowie in Form einer Aufwärmung von Bänken und Haltestellenbereichen, Wärmekammern, Saunaräumen, Wasserreservoiren, Wandtrocknungssystemen, Böden und Arbeitsflächen (ESD, EPA).

Heizungen können auch zu dreidimensionalen Gebilden geformt, insbesondere gegossen, werden, so, wie bereits erwähnt, z.B. zu Säulen oder dekorativen Skulpturen für den Wohnraumbereich.

Mit dem Baustoffgemisch 1 realisierte Baustoffheizungssystem können beispielhaft wie folgt in drei Klassen klassifiziert werden:

### Klasse 1:

Diese Klasse ist gekennzeichnet durch ein Verhältnis Grafit : SysCompound^{®} von 3:1 bis 1,5:1 (Baustoffmasse nach Wasserzugabe für die Verarbeitung und nach Endaushärtung).

Dadurch ergeben sich folgende Vorteile: eine sehr hohe Heizleistung bei sehr niedrigen Spannungen im Bereich von 5 - 20 V, sehr hohe Temperaturbereiche bis 1000 °C, die geringste Baustofffestigkeit, jedoch gut mit dem nahezu grafitfreien SysCompound^{®} versiegel- und/oder umhüllbar, so dass letztlich eine ausreichend hohe Stabilität erzielbar ist, ein ungefährlicher Einsatz unter Wasser durch Niedrigspannung, ein Einsatz sowohl als Beschichtungsheizmasse, wie z.B. auf Wärmedämmplatten, als auch als Massiv-Heizbaukörper, eine stufenlose Temperatureinstellung und -regelung über eine angelegte Spannung an den Elektroden, welche einen gleichmäßigen Stromfluss von Elektrode zu Elektrode über Flächenelektroden, wie z.B. Stromschienen, Strombänder oder Stromplatten ermöglicht, eine optimale Temperaturregelung auch im Verbund einer Reihenschaltung, vorteilhafte Schaltungsanordnungen bei Verknüpfung mehrerer Beschichtungsplatten bzw. Heizkörper, vorteilhaft in Form einer Reihenschaltung mit Aufsummierung der Spannung, bei konstanter und hoher Stromstärke, Energie-Einspeisemöglichkeit durch Solarzellen.

### Klasse 2:

Diese Klasse ist gekennzeichnet durch ein Verhältnis Grafit : SysCompound^{®} von 1,5:1 bis 0,7:1 (Baustoffmasse nach Wasserzugabe für die Verarbeitung und nach Endaushärtung).

Dadurch ergeben sich folgende Vorteile: eine mittlere Heizleistung bei mittleren Spannungen im Bereich von 20-80 V, sehr hohe Temperaturbereiche bis 300 °C, eine akzeptable Baustofffestigkeit, jedoch gut mit dem grafitfreien SysCompound^{®} versiegel- und/oder umhüllbar, so dass letztlich eine sehr hohe Stabilität erzielbar ist, ein Einsatz teilweise mit Elektrodenschutzmaßnahmen unter Wasser durch immer noch geringe Spannung bei guter Stromdurchleitung durch das erfindungsgemäße Baustoffgemisch, Nutzung sowohl als Beschichtungsheizmasse, wie z.B. auf Wärmedämmplatten, als auch als Massiv-Heizbaukörper, stufenlose Temperatureinstellung und -regelung, wie bei Klasse 1 erwähnt, Reihen- und/oder Parallelschaltung, vorteilhafte Schaltungsanordnung bei Verknüpfung mehrerer Beschichtungsplatten bzw. Heizkörper, vorteilhaft in Form einer Reihenschaltung, Parallelschaltung oder Kombinationsschaltung, Energie-Einspeisemöglichkeit durch Solarzellen.

### Klasse 3:

Diese Klasse ist gekennzeichnet durch ein Verhältnis Grafit: SysCompound^{®} von 0,7:1 bis 0,3:1 (Baustoffmasse nach Wasserzugabe für die Verarbeitung und nach Endaushärtung).

Dadurch ergeben sich folgende Vorteile: niedrigste Heizleistung bei relativ hohen Spannungen im Bereich von 80-250 V, hohe Temperaturbereiche bis 150 °C, hervorragende Baustofffestigkeit, jedoch gut mit dem grafitfreien SysCompound^{®} versiegel- und/oder umhüllbar, sehr hohe Stabilität, Einsetzbarkeit unter Wasser wegen hoher Spannungsbereiche nicht mehr, dafür aber Einsatz als hochwertiger Baustoff möglich, der zusätzlich noch aufheizbar ist, Einsetzbarkeit sowohl als Beschichtungsheizmasse, wie z.B. auf Wärmedämmplatten, als auch als Massiv-Heizbaukörper mit hoher Festigkeit, Temperatureinstellung und -regelung wie bei Klasse 2, Reihen- und/oder Parallelschaltung wie bei Klasse 2, vorteilhafte Schaltungsanordnung bei Verknüpfung mehrerer Beschichtungsplatten bzw. Heizkörper in Form einer Parallelschaltung unter Aufsummierung der Stromstärken bei konstanten Spannungen. Ab ca. 3-facher SysCompound^{®}-Masse bezogen auf die Grafit-Masse (Pulverwerkstoff) ist dieses Baustoffgemisch ohne Spannungsanlegung über die Elektroden für die Errichtung oder Beschichtung ableitfähiger Flächen, wie zum Beispiel Fußböden, Tische oder dergleichen, geeignet.

Ein Herstellungsverfahren zur Heizungs- bzw. Modulherstellung umfasst folgende Schritte.
Schritt1: Vorsehen des Baustoffgemisches 1.
Schritt 2: Zugabe von Wasser zum Baustoffgemisch gemäß Schritt 1.
Schritt 3: Mischen von Wasser und Baustoffgemisch.
Schritt 4: Bereitstellen der Heizungs- bzw. Modulform beispielsweise durch Streichen, Giessen, Aufpressen, Auftragen, Aufspritzen (wie zuvor beschrieben).
Schritt 5: Trocknen bzw. Aushärten des gemäß Schritt 4 aufgebrachten Baustoffgemisches 1.

Bei aus einem Heizbaustoffgemisch hergestellten Formkörpern oder Schichten in Dichtwannen kann der Formkörper oder können die Schichten nach Erreichen ausreichender Wasserstabilität infolge der Möglichkeit der Unterwasser-Betreibung des Baustoffheizsystems mit Wasser kontaktiert bzw. umhüllt werden und langsam erhärtungsbeschleunigend nach Anlegung einer Spannung über die Kontaktelektroden eine Aufheizung auf unter 80 °C erfahren. Dies wirkt sich nicht nur positiv auf die Erhärtungsgeschwindigkeit analog zu einer Wärmebehandlung herkömmlicher hydraulisch erhärtender Baustoffsysteme aus, sondern es sorgt für eine höhere spannungsfreie Homogenität des Gefüges und für höhere Endfestigkeiten sowie eine bessere Ausnutzung des Heizbaustoffes hinsichtlich der Wärmeerzeugung.

Die Kontakte können zwischen den Schritten 3 und 4, den Schritten 4 und 5 oder nach dem Schritt 5 angebracht werden.

Die Erfindung ist nicht auf die beschriebenen Beispiele beschränkt, so können beispielsweise auch geringere oder höhere Grafitbeimischungen realisiert werden. Auch können gezeigte oder beschriebene Merkmale verschiedener Beispiele miteinander kombiniert werden. Ferner können Module nach Fig. 1 bis 3 auch im Straßenbereich verwendet werden. Ein Anstrich nach Fig. 5 ist auch als Bodenheizung einsetzbar. Der Begriff feines Pulver ist hier weit auszulegen. So wird hier ein Material mit einer Partikelgröße von weniger als 0,2 mm, beispielsweise 0,09 mm, noch als feines Pulver verstanden.

### Bezugszeichenliste:

- 1: Baustoffgemisch
- 2: Heizungswiderstand
- 3: erster Pol
- 4: zweiter Pol
- 5: erster Anschluss
- 6: zweiter Anschluss
- 7a-d: Heizkörper
- 8,9: Kontaktstäbe
- 11-19: Module
- 20: Wandheizung
- 21,22: Kontakte
- 23: Wand
- 24: Gleichspannungsquelle
- 25: Regler

## Patentansprüche

1. Baustoffgemisch (1) zur Verwendung als elektrisches Heizungswerkstoffgemisch mit einem unter Zugabe von Wasser aushärtbaren, als Bindemittel wirkenden Baustoff und mit einem vorher zugefügten, auf Kohlenstoff basierenden, elektrisch leitfähigen, feinen Pulverwerkstoff, wobei das ausgehärtete Gemisch einen elektrischen Heizungswiderstand (2) zwischen mehreren elektrischen Polen (3, 4) bzw. Anschlüssen (5, 6) bildet, so dass sich das Baustoffgemisch (1) beim Anlegen einer Spannung an den Polen (3, 4) bzw. Anschlüssen (5, 6) infolge des durch das Baustoffgemisch (1) fließenden elektrischen Stroms erwärmt, **dadurch gekennzeichnet, dass** das Bindemittel ein mineralischer Systemwerkstoff ist, wobei der mineralische Systemwerkstoff als Flugaschedominant gekennzeichnet ist und der Flugascheanteil im eingesetzten Bindemittel zwischen 50 und 80 Gew.-% beträgt, wobei das Verhältnis von Pulverwerkstoff zu dem als Bindemittel wirkenden Baustoff 3:1 bis 1:3 beträgt, und wobei der Pulverwerkstoff Grafit enthält.

2. Baustoffgemisch nach Anspruch 1, **dadurch gekennzeichnet, dass** das Baustoffgemisch (1) metallfrei, insbesondere metallfaserfrei bzw. metallspanfrei, ist.

3. Baustoffgemisch nach Anspruch 1 oder 2, **dadurch gekennzeichnet, dass** der Pulverwerkstoff aus einem Primärgrafit mit einem Kohlenstoffgehalt von 90 bis 99% und einem Sekundärgrafit aus einem anderen Mahlgut mit geringerem Kohlenstoffgehalt besteht.

4. Baustoffgemisch nach einem der vorhergehenden Ansprüche, **dadurch gekennzeichnet, dass** die Teilchengröße des Pulverwerkstoffes kleiner als 0,09 mm ist.

5. Baustoffgemisch nach einem der vorhergehenden Ansprüche, **dadurch gekennzeichnet, dass** das Baustoffgemisch (1) zusätzlich Sand, insbesondere Quarzsand, oder ein Sandgemisch enthält.

6. Baustoffgemisch nach einem der vorhergehenden Ansprüche, **dadurch gekennzeichnet, dass** das Baustoffgemisch (1) zusätzlich Kohlenstofffasern enthält.

7. Heizkörper (7a - 7d) mit einem Baustoffgemisch (1) nach einem der vorhergehenden Ansprüche.

8. Heizkörper nach Anspruch 7, **dadurch gekennzeichnet, dass** der Heizkörper aus einem elektrisch-leitfähigen Baustoffgemisch (1) und einem nicht bzw. geringleitfähigen Baustoffgemisch, vorzugsweise zur Umhüllung, Einbettung und/oder Beschichtung des elektrisch-leitfähigen Baustoffgemisches (1), besteht.

## Claims

1. Building material mixture (1) for use as an electrical heating material mixture with a building material which can be hardened with the addition of water and acts as a binder and with a previously added, carbon-based, electrically conductive, fine powder material, the hardened mixture forming an electrical heating resistor (2) between a plurality of electrical poles (3, 4) or terminals (5, 6), such that, when a voltage is applied to the poles (3, 4) or terminals (5, 6) the building material mixture (1) heats up when a voltage is applied to the poles (3, 4) or terminals (5, 6) as a result of the electric current flowing through the building material mixture (1), **characterized in that** the binder is a mineral system material, the mineral system material being characterized as fly ash-dominant and the proportion of fly ash in the binder used being between 50 and 80 % by weight, the ratio of powder material to the building material acting as binder being 3:1 to 1:3, and the powder material containing graphite.

2. Building material mixture according to claim 1, **characterized in that** the building material mixture (1) is metal-free, in particular metal fiber-free or metal chip-free.

3. Building material mixture according to claim 1 or 2, **characterized in that** the powder material consists of a primary graphite with a carbon content of 90 to 99% and a secondary graphite from another ground material with a lower carbon content.

4. Building material mixture according to one of the preceding claims, **characterized in that** the particle size of the powder material is smaller than 0.09 mm.

5. Building material mixture according to one of the preceding claims, **characterized in that** the building material mixture (1) additionally contains sand, in particular quartz sand, or a sand mixture.

6. Building material mixture according to one of the preceding claims, **characterized in that** the building material mixture (1) additionally contains carbon fibers.

7. Radiator (7a - 7d) with a building material mixture (1) according to one of the preceding claims.

8. Radiator according to claim 7, **characterized in that** the radiator consists of an electrically conductive building material mixture (1) and a non-conductive or lowconductive building material mixture, preferably for encasing, embedding and/or coating the electrically conductive building material mixture (1).

## Revendications

1. Mélange de matériaux de construction (1) destiné à être utilisé comme mélange de matériaux de chauffage électrique, comprenant un matériau de construction durcissable par ajout d'eau et agissant comme liant et comprenant un matériau en poudre fine, conducteur de l'électricité, à base de carbone, ajouté au préalable, le mélange durci formant une résistance de chauffage électrique (2) entre plusieurs pôles (3, 4) ou bornes (5, 6) électriques, de sorte que le mélange de matériaux de construction (1) s'échauffe lorsqu'une tension est appliquée aux pôles (3, 4) ou bornes (5, 6) en raison du courant électrique circulant à travers le mélange de matériaux de construction (1), **caractérisé en ce que** le liant est un matériau de système minéral, le matériau de système minéral étant caractérisé comme étant à dominante de cendres volantes et la proportion de cendres volantes dans le liant utilisé étant comprise entre 50 et 80 % en poids, le rapport du matériau en poudre sur le matériau de construction servant de liant étant de 3:1 à 1:3 et le matériau en poudre contenant du graphite.

2. Mélange de matériaux de construction selon la revendication 1, **caractérisé en ce que** le mélange de matériaux de construction (1) est exempt de métaux, en particulier de fibres métalliques ou de copeaux métalliques.

3. Mélange de matériaux de construction selon la revendication 1 ou 2, **caractérisé en ce que** le matériau en poudre est constitué d'un graphite primaire ayant une teneur en carbone de 90 à 99 % et d'un graphite secondaire provenant d'un autre matériau broyé ayant une teneur en carbone inférieure.

4. Mélange de matériaux de construction selon l'une des revendications précédentes, **caractérisé en ce que** la taille de particules du matériau en poudre est inférieure à 0,09 mm.

5. Mélange de matériaux de construction selon l'une des revendications précédentes, **caractérisé en ce que** le mélange de matériaux de construction (1) contient en outre du sable, en particulier du sable de quartz, ou un mélange de sables.

6. Mélange de matériaux de construction selon l'une des revendications précédentes, **caractérisé en ce que** le mélange de matériaux de construction (1) contient en outre des fibres de carbone.

7. Corps de chauffe (7a - 7d) doté d'un mélange de matériaux de construction (1) selon l'une des revendications précédentes.

8. Corps de chauffe selon la revendication 7, **caractérisé en ce que** le corps de chauffe est constitué d'un mélange de matériaux de construction électriquement conducteur (1) et d'un mélange de matériaux de construction non conducteur ou faiblement conducteur, prévu de préférence pour envelopper, enrober et/ou revêtir le mélange de matériaux de construction électriquement conducteur (1).
